# EUROPÄISCHE PATENTANMELDUNG

(11) **EP 4 212 661 A1**
(43) Veröffentlichungstag der Anmeldung: **19.07.2023**
(21) Anmeldenummer: 22151141.3
(22) Anmeldetag: 12.01.2022
(51) Int. Cl.: D06C 23/04, B32B 38/04, B60D 5/00, B61D 17/22

(54) **FLÄCHENGEBILDE, MEHRSCHICHTIGES FLÄCHENGEBILDE, ÜBERGANGSELEMENT UND FAHRZEUG, FLUGGASTBRÜCKE, FLUGGASTTREPPE ODER GEBÄUDEVERBINDUNG**

(71) Anmelder: Hübner GmbH & Co. KG, 34123 Kassel (DE)
(72) Erfinder: Wiegrefe, Andreas, 36039 Fulda (DE); Hierling, Christian, 34385 Bad Karlshafen (DE); Hübner, Reinhard, 34130 Kassel (DE)

(57) **Zusammenfassung**

Die Erfindung betrifft ein Flächengebilde (100) für ein Übergangselement (1000) zum Schutz eines Übergangs von zwei relativ zueinander beweglich miteinander verbundenen Fahrzeugteilen (1100, 1200) oder Bauteilen. Das Flächengebilde weist zumindest einen ersten Abschnitt (110) und zumindest einen zweiten Abschnitt (120) auf. Der erste Abschnitt und der zweite Abschnitt unterscheiden sich in zumindest einer mechanischen Eigenschaft. Der erste Abschnitt (110) weist zumindest eine Materialschwächung (111) zur Veränderung der zumindest einen mechanischen Eigenschaft in dem ersten Abschnitt auf.

## Beschreibung

### TECHNISCHES GEBIET

Die Erfindung betrifft ein Flächengebilde sowie ein mehrschichtiges Flächengebilde. Weiterhin betrifft die Erfindung die Herstellung eines Flächengebildes sowie eines mehrschichtigen Flächengebildes. Ebenso betrifft die Erfindung ein Übergangselement mit einem Flächengebilde oder einem mehrschichtigen Flächengebilde. Ein weiterer Aspekt der Erfindung liegt in einem Fahrzeug, einer Fluggastbrücke, einer Fluggasttreppe oder einer Gebäudeverbindung mit einem ein Flächengebilde oder ein mehrschichtiges Flächengebilde umfassendem Übergangselement.

### TECHNISCHER HINTERGRUND

Beweglich miteinander verbundene Bauteile, beispielsweise in einem Fahrzeug, einer Fluggastbrücke oder -treppe oder in Gebäuden, können einen Übergang aufweisen. Der Übergang kann durch einen Übergangsschutz (auch Übergangselement genannt) geschützt werden. Ein solcher Übergangsschutz kann als Wellen- oder Faltenbalg ausgestaltet sein. Die Form des Wellen- oder Faltenbalgs kann sich an die Stellung der beweglich miteinander verbundenen Bauteile zueinander anpassen.

Ein solcher Übergangsschutz muss verschiedene Funktionen erfüllen. Der Übergangsschutz muss mechanisch belastbar sein, eine ausreichende Verformbarkeit aufweisen und langlebig sein.

Zur Erfüllung der verschiedenen Funktionen werden Wellen- oder Faltenbälge oft aus verschiedenen Elementen hergestellt, wobei die verschiedenen Elemente unterschiedlich ausgebildet sind und zur Herstellung eines Balgs oder eines Balgabschnitts zusammengefügt werden. Oft sind Wellen- oder Faltenbälge Spezial- oder Maßanfertigungen. Dadurch ist die Herstellung aufwendig und kostenintensiv.

WO 2018/146227 A1 offenbart ein Flächengebilde, das Bereiche mit unterschiedlichen mechanischen Eigenschaften aufweist. Dabei ist ein Bereich verstärkt und ein anderer Bereich nicht verstärkt.

### ZUSAMMENFASSUNG DER OFFENBARUNG

Der Erfindung liegt die Aufgabe zu Grunde ein Flächengebilde bereitzustellen, das einfach und kostengünstig herstellbar ist. Eine weitere Aufgabe der Erfindung liegt darin, ein Flächengebilde bereitzustellen, dessen mechanische Eigenschaften einfach und kostengünstig für eine bestimmte Anforderung zugeschnitten werden können.

Gelöst wird die Aufgabe durch die Gegenstände der unabhängigen Ansprüche. Weiterbildungen der Erfindung sind in den abhängigen Ansprüchen definiert.

Angegeben ist ein Flächengebilde für ein Übergangselement zum Schutz eines Übergangs von zwei relativ zueinander beweglich miteinander verbundenen Fahrzeugteilen oder Bauteilen. Das Flächengebilde weist zumindest einen ersten Abschnitt und zumindest einen zweiten Abschnitt auf. Der erste Abschnitt und der zweite Abschnitt unterscheiden sich in zumindest einer mechanischen Eigenschaft. Der erste Abschnitt weist zumindest eine Materialschwächung zur Veränderung der zumindest einen mechanischen Eigenschaft in dem ersten Abschnitt auf.

Das Flächengebilde kann einstückig sein. Das Flächengebilde kann aus gleichen (flächigen) Elementen zusammengesetzt sein. Das (gesamte) Flächengebilde kann aus einem Material, beispielsweise einem Stoff oder einer Zusammensetzung, bestehen. Mit anderen Worten, das Flächengebilde kann gleiche Abschnitte aus gleichen Materialien umfassen.

Es ist auch möglich, dass das Flächengebilde aus Abschnitten aus unterschiedlichen Materialien zusammengesetzt ist, die sich z. B. auch von sich aus, d. h. ohne Einbringen der Materialschwächung, bereits in zumindest einer mechanischen Eigenschaft unterscheiden. Durch das Einbringen einer Materialschwächung in zumindest einem der Abschnitte, können die mechanischen Eigenschaften dieses Abschnitts gegenüber dem zumindest einem anderen Abschnitt weiter gezielt verändert werden.

Das Flächengebilde kann ein textiles Flächengebilde sein. Ein textiles Flächengilde kann ein oder mehrere Textilien umfassen oder aus einem oder mehreren Textilien bestehen. Das Flächengebilde kann ein flächiges Trägertextil, bevorzugt ein flächiges Trägergewebe, sein.

Statt eines textilen Flächengebildes kann es sich auch um eine andere Art Flächengebilde handeln. Z. B. kann das Flächengebilde eine kunststoff- oder elastomerbasierte Folie sein. Um lediglich ein weiteres Beispiel zu nennen, kann es sich auch um Platten aus einem faserverstärkten Verbundwerkstoff wie GFK-Platten sowie flexible Platten verschiedenster Ausführungen, Materialien und Oberflächen handeln.

Durch die zumindest eine Materialschwächung (auch kurz Schwächung genannt) in einem Abschnitt, kann eine mechanische Eigenschaft des Abschnitts verändert sein. Dabei kann sich die Veränderung auf die mechanische Eigenschaft des Abschnitts ohne die Materialschwächung oder vor Einbringung der Materialschwächung beziehen.

Beispielsweise kann ein Flächengebilde aus einem Material mit einer mechanischen Eigenschaft bereitgestellt werden. Sollen unterschiedliche Abschnitte des Flächengebildes unterschiedliche Werte der mechanischen Eigenschaft aufweisen, kann zumindest ein Abschnitt des Flächengebildes mit einer Materialschwächung versehen werden. Durch die Materialschwächung kann der Wert der mechanischen Eigenschaft in dem Bereich mit der Materialschwächung verändert, z.B. reduziert, werden. Dadurch lässt sich das bereitgestellte Flächengebilde für eine gewünschte Anwendung einfach anpassen, wenn für die Anwendung in unterschiedlichen Abschnitten verschiedene Größen oder Werte einer mechanischen Eigenschaft gewünscht sind.

Die zumindest eine Eigenschaft kann eine Biegesteifigkeit umfassen oder sein. Die Biegesteifigkeit kann bestimmt werden nach VDA 230-209 Teil C, insbesondere nach der am Anmeldetag gültigen Fassung. In dem ersten Abschnitt des Flächengebildes kann die Biegesteifigkeit geringer sein als in dem zweiten Abschnitt des Flächengebildes. Durch die zumindest eine Materialschwächung in dem ersten Abschnitt kann die Biegesteifigkeit verglichen mit der Biegesteifigkeit in dem ersten Abschnitt ohne Materialschwächung reduziert werden.

Die Biegesteifigkeit eines zweiten Abschnitts (ohne Materialschwächung) des Flächengebildes kann maximal 100 Nmm betragen. Bevorzugt beträgt die Biegesteifigkeit maximal 75 Nmm. Die Biegesteifigkeit in Kettrichtung kann zwischen 1 Nmm und 75 Nmm liegen. Die Biegesteifigkeit in Schussrichtung kann zwischen 0,5 Nmm und 40 Nmm liegen.

Die zumindest eine Eigenschaft kann eine Elastizität umfassen oder sein. Die Elastizität kann bestimmt werden nach DIN EN ISO 20932-1:2020-05. In dem ersten Abschnitt des Flächengebildes kann die Elastizität größer oder geringer sein als in dem zweiten Abschnitt des Flächengebildes. Durch die zumindest eine Materialschwächung in dem ersten Abschnitt kann die Elastizität verglichen mit der Elastizität in dem ersten Abschnitt ohne Materialschwächung erhöht oder reduziert werden.

Die zumindest eine Eigenschaft kann einen Elastizitätsmodul umfassen oder sein. Der Elastizitätsmodul kann nach bekannten Verfahren bestimmt werden. In dem ersten Abschnitt des Flächengebildes kann der Elastizitätsmodul geringer sein als in dem zweiten Abschnitt des Flächengebildes. Durch die zumindest eine Materialschwächung in dem ersten Abschnitt kann der Elastizitätsmodul verglichen mit dem Elastizitätsmodul in dem ersten Abschnitt ohne Materialschwächung reduziert werden.

Die zumindest eine Eigenschaft kann eine Höchstzugkraft umfassen oder sein. Die Höchstzugkraft kann bestimmt werden nach DIN EN ISO 13934-1:2013-08. In dem ersten Abschnitt des Flächengebildes kann die Höchstzugkraft geringer sein als in dem zweiten Abschnitt des Flächengebildes. Durch die zumindest eine Materialschwächung in dem ersten Abschnitt kann die Höchstzugkraft verglichen mit der Höchstzugkraft in dem ersten Abschnitt ohne Materialschwächung reduziert werden.

Die zumindest eine Eigenschaft kann eine Höchstzugkraft-Dehnung umfassen oder sein. Die Höchstzugkraft-Dehnung kann bestimmt werden nach DIN EN ISO 13934-1:2013-08. In dem ersten Abschnitt des Flächengebildes kann die Höchstzugkraft-Dehnung größer sein als in dem zweiten Abschnitt des Flächengebildes. Durch die zumindest eine Materialschwächung in dem ersten Abschnitt kann die Höchstzugkraft-Dehnung verglichen mit der Höchstzugkraft-Dehnung in dem ersten Abschnitt ohne Materialschwächung erhöht werden.

Die zumindest eine Eigenschaft kann eine Zugkraft umfassen oder sein. Die Zugkraft kann bestimmt werden nach DIN EN ISO 13934-1:2013-08. In dem ersten Abschnitt des Flächengebildes kann die Zugkraft geringer sein als in dem zweiten Abschnitt des Flächengebildes. Durch die zumindest eine Materialschwächung in dem ersten Abschnitt kann die Zugkraft verglichen mit der Zugkraft in dem ersten Abschnitt ohne Materialschwächung reduziert werden.

Die zumindest eine Eigenschaft kann eine Dehnung umfassen oder sein. Die Dehnung kann bestimmt werden nach DIN EN ISO 13934-1:2013-08. In dem ersten Abschnitt des Flächengebildes kann die Dehnung größer sein als in dem zweiten Abschnitt des Flächengebildes. Durch die zumindest eine Materialschwächung in dem ersten Abschnitt kann die Dehnung verglichen mit der Dehnung in dem ersten Abschnitt ohne Materialschwächung erhöht werden.

Der erste Abschnitt und der zweite Abschnitt können sich in zumindest zwei der genannten Eigenschaften, bevorzugt zumindest drei der genannten Eigenschaften, unterscheiden.

Allgemein kann größer zumindest 1 %, bevorzugt zumindest 5 %, bevorzugter zumindest 10 %, bevorzugter zumindest 20 %, größer bedeuten. Geringer kann zumindest 1 %, bevorzugt zumindest 5 %, bevorzugter zumindest 10 %, bevorzugter zumindest 20 %, geringer bedeuten.

Die Materialschwächung kann eine Ausnehmung, eine Perforierung, eine Einkerbung, eine Einschnürung und/oder eine Dickenreduktion sein. Die Materialschwächung kann durch Garne unterschiedlicher Dicke oder unterschiedlicher Durchmesser gebildet sein. Das Flächengebilde kann in dem ersten Abschnitt zumindest abschnittsweise ein Garn mit einer geringeren Dicke oder einem geringeren Durchmesser umfassen als in dem zweiten Abschnitt. Durch das Garn mit der geringeren Dicke oder dem geringeren Durchmesser kann die Materialschwächung gebildet sein. Bevorzugt wird die Materialschwächung in einen Abschnitt eines Flächengebildes eingebracht. Insbesondere ist die Materialschwächung eine Perforierung, besonders bevorzugt eine Laserperforierung.

Die Materialschwächung kann sich höchstens teilweise oder vollständig durch das Flächengebilde erstrecken, insbesondere von einer ersten Seite des Flächengebildes zu einer zweiten Seite des Flächengebildes.

Die Materialschwächung kann einen kreisrunden, ovalen, dreieckigen, viereckigen, insbesondere rechteckigen oder quadratischen, oder n-eckigen Querschnitt aufweisen. Der Querschnitt der Materialschwächung kann in einer von dem Flächengebilde definierten Ebene liegen. Die Materialschwächung kann auch beliebige andere Geometrien aufweisen.

Die Materialschwächung kann eine Querschnittsfläche von zumindest 0,5 mm², bevorzugt zumindest 1 mm², bevorzugter zumindest 3 mm², bevorzugter zumindest 6 mm², aufweisen. Die Materialschwächung kann eine Querschnittsfläche von höchstens 100 mm², bevorzugt höchstens 50 mm², bevorzugter höchstens 20 mm², aufweisen.

Der erste Abschnitt des Flächengebildes kann eine Vielzahl von Materialschwächungen aufweisen. Bevorzugt weist der erste Abschnitt des Flächengebildes zumindest 10 Materialschwächungen, bevorzugt zumindest 50 Materialschwächungen, bevorzugter zumindest 100 Materialschwächungen, auf. Der erste Abschnitt des Flächengebildes kann ein zusammenhängender Abschnitt sein. Jede der Materialschwächungen kann jede hierin offenbarte Materialschwächung sein.

Der erste Abschnitt des Flächengebildes kann zwischen 0,01 Materialschwächungen pro cm² und 100 Materialschwächungen pro cm² aufweisen. Bevorzugt weist der erste Abschnitt des Flächengebildes zwischen 0,05 Materialschwächungen pro cm² und 50 Materialschwächungen pro cm², bevorzugter zwischen 0,1 Materialschwächungen pro cm² und 10 Materialschwächungen pro cm², auf.

Die Materialschwächungen können in einem regelmäßigen Raster in dem ersten Abschnitt angeordnet sein. Beispielsweise können die Materialschwächungen in entlang von gedachten, sich kreuzenden Linien angeordnet sein, wobei an den Schnittpunkten der Linien die Materialschwächungen, bevorzugt der Mittelpunkt einer jeweiligen Materialschwächung, angeordnet sind. Erste Linien können regelmäßig beabstandet und parallel vorliegen und zweite Linien können regelmäßig beabstandet und parallel vorliegen. Ein Winkel zwischen ersten und zweiten Linien ist bevorzugt ungleich 0 ° und ungleich 180 °. Insbesondere ist der Winkel zwischen ersten und zweiten Linien 90 °. Alternativ können die Materialschwächungen unregelmäßig in dem ersten Abschnitt des Flächengebildes angeordnet sein.

Eine Fläche des ersten Abschnitts kann zumindest 5 %, bevorzugt zumindest 10 %, einer Gesamtfläche des Flächengebildes betragen. Die Fläche des ersten Abschnitts kann höchstens 50 %, bevorzugt höchstens 30 %, der Gesamtfläche des Flächengebildes betragen. Eine Fläche des zweiten Abschnitts kann zumindest 20 %, bevorzugt zumindest 50 %, einer Gesamtfläche des Flächengebildes betragen. Die Fläche des zweiten Abschnitts kann höchstens 90 %, bevorzugt höchstens 70 %, der Gesamtfläche des Flächengebildes betragen.

Eine Fläche des ersten Abschnitts kann zumindest 10 cm², bevorzugt zumindest 20 cm², bevorzugter zumindest 30 cm², betragen.

Das Flächengebilde kann zumindest zwei erste Abschnitte umfassen. Bevorzugt umfasst das Flächengebilde zumindest drei, bevorzugter zumindest vier, erste Abschnitte. Die ersten Abschnitte können voneinander beabstandet in dem Flächengebilde vorliegen. Die verschiedenen ersten Abschnitte können dabei gleiche oder verschiedene Materialschwächungen aufweisen. Beispielsweise können Perforationen mit verschiedenen Geometrien und/oder verschiedenen Flächendichten vorhanden sein.

Das Flächengebilde kann ein Polyester, ein Polyamid, ein Aramid, Polypropylen, Baumwolle und/oder Viskose umfassen oder daraus bestehen. Es können jedoch auch andere Materialien verwendet werden. Das Flächengebilde kann ein Gewebe, ein Gestricke, ein Gewirke, ein Vlies (Non-woven) oder ein Gelege (z.B. ein Fadengelege) sein.

Angegeben ist ein mehrschichtiges Flächengebilde für ein Übergangselement zum Schutz eines Übergangs von zwei relativ zueinander beweglich miteinander verbundenen Fahrzeugteilen oder Bauteilen. Das mehrschichtige Flächengebilde umfasst ein hierin offenbartes Flächengebilde. Zumindest eine Seite des Flächengebildes ist mit einer Beschichtung versehen.

Alle Seiten des Flächengebildes können mit der Beschichtung versehen sein. Das Flächengebilde kann vollständig von der Beschichtung umschlossen oder umgeben sein.

Die Beschichtung kann einen Kunststoff umfassen. Insbesondere umfasst die Beschichtung ein Elastomer, ein Silikon, ein chlorsulfoniertes Polyethylen, ein TPU (thermoplastisches Polyurethan), EPDM (Ethylen-Propylen-Dien-Kautschuk) und/oder PVC (Polyvinylchlorid).

Die Beschichtung kann eine größere Dicke als das Flächengebilde aufweisen. Alternativ kann die Beschichtung eine geringere Dicke als das Flächengebilde aufweisen. Die Dicke kann senkrecht zur flächigen Erstreckung des Flächengebildes orientiert sein.

Mechanische Eigenschaften des mehrschichtigen Flächengebildes können durch das Flächengebilde bereitgestellt werden und beeinflusst werden. Die Beschichtung kann ebenso die mechanischen Eigenschaften des mehrschichtigen Flächengebildes beeinflussen. Weiterhin kann die Beschichtung das Flächengebilde von Umwelteinflüssen schützen, dem mehrschichtigen Flächengebilde eine Schallschutz-Eigenschaft verleihen und/oder die Langlebigkeit des mehrschichtigen Flächengebildes verbessern.

Angegeben ist ein Verfahren zur Herstellung eines Flächengebildes für ein Übergangselement zum Schutz eines Übergangs von zwei relativ zueinander beweglich miteinander verbundenen Fahrzeugteilen oder Bauteilen. Das Verfahren umfasst die Schritte: Bereitstellen eines Flächenelements mit zumindest einer mechanischen Eigenschaft und zumindest einem ersten Abschnitt und zumindest einem zweiten Abschnitt; Aufbringen oder Einbringen zumindest einer Materialschwächung auf oder in das Flächenelement in dem ersten Abschnitt, sodass die zumindest eine mechanische Eigenschaft in dem ersten Abschnitt verändert wird; und Erhalten eines Flächengebildes mit zumindest dem ersten Abschnitt und zumindest dem zweiten Abschnitt, wobei sich der erste Abschnitt und der zweite Abschnitt in der zumindest einen mechanischen Eigenschaft unterscheiden.

In dem Verfahren kann jedes hierin offenbarte Flächengebilde hergestellt werden.

Das Aufbringen oder Einbringen der Materialschwächung auf oder in das Flächenelement in dem ersten Abschnitt kann durch eine Perforierung, insbesondere durch eine Laserperforierung, erfolgen.

Das Verfahren kann zusätzlich umfassen: Abtrennen eines Formabschnitts des Flächenelements. Der Formabschnitt kann den ersten Abschnitt und den zweiten Abschnitt umfassen. Der Formabschnitt kann eine Form aufweisen. Das Flächengebilde kann die Form des Formabschnitts aufweisen.

Das Verfahren kann zusätzlich umfassen: Aufbringen einer Beschichtung auf zumindest eine Seite des Flächenelements oder des Flächengebildes. Die Beschichtung kann den ersten Abschnitt zumindest teilweise, insbesondere vollständig, bedecken. Die Beschichtung kann so auf das Flächenelement oder das Flächengebilde aufgebracht werden, dass die Beschichtung das Flächenelement oder das Flächengebilde vollständig umgibt oder umschließt.

Das Verfahren kann zum Herstellen eines Übergangselements zum Schutz eines Übergangs von zwei relativ zueinander beweglich miteinander verbundenen Fahrzeug- oder Bauteilen zusätzlich umfassen: Abtrennen eines Teils aus dem Flächengebilde bzw. dem mehrschichtigen Flächengebilde und/oder Formen eines/des Teils aus dem Flächengebilde bzw. dem mehrschichtigen Flächengebilde entsprechend einer vorgegebenen Kontur. Z. B. kann ein Formteil für eine Welle oder eine Falte eines Übergangsbalgs abgetrennt und/oder geformt werden. Dabei kann das Abtrennen und/oder Formen so erfolgen, dass der erste Abschnitt und der zweite Abschnitt jeweils so orientiert sind, dass die mechanischen Eigenschaften passend sind für die gewünschte Kontur.

Der zweite Abschnitt des Flächengebildes kann die zumindest eine mechanische Eigenschaft des Flächenelements aufweisen.

Die zumindest eine mechanische Eigenschaft des Flächenelements kann, insbesondere in dem zweiten Abschnitt, nicht verändert werden. Mit anderen Worten, die zumindest eine mechanische Eigenschaft des Flächenelements kann, insbesondere in dem zweiten Abschnitt, unverändert bleiben, insbesondere kann die mechanische Eigenschaft während der Herstellung des Flächengebildes unverändert bleiben.

Angegeben ist ein Übergangselement zum Schutz eines Übergangs von zwei relativ zueinander beweglich miteinander verbundenen Fahrzeugteilen oder Bauteilen. Das Übergangselement kann jedes hierin offenbarte Flächengebilde umfassen. Das Übergangselement kann jedes hierin offenbarte mehrschichtige Flächengebilde umfassen.

Das Übergangselement kann einen Querschnitt mit Eckbereichen aufweisen. Die Eckbereiche können abgerundet sein. Bevorzugt ist in zumindest einem der Eckbereiche ein erster Abschnitt des Flächengebildes vorgesehen. Besonders bevorzugt ist in jedem der Eckbereiche jeweils ein erster Abschnitt des Flächengebildes vorgesehen. Dazu kann das Flächengebilde zumindest vier erste Abschnitte aufweisen. Der Querschnitt des Übergangselements kann viereckförmig sein, insbesondere rechteckförmig oder quadratförmig. Das Übergangselement kann vier Eckbereiche aufweisen.

Das Übergangselement kann ein Übergangsbalg sein. Bevorzugt ist das Übergangselement ein Wellen- oder Faltenbalg.

Insbesondere im Fall eines Wellen- oder Faltenbalgs können in den Eckbereichen des dafür verwendeten Flächengebildes mehrere Abschnitte vorgesehen sein, die sich in der Art und dem Grad der Materialschwächung unterscheiden. In den Randbereichen der Wellen kann eine stärker ausgeprägte Materialschwächung vorgesehen sein als im mittleren Bereich. Konkret können Perforationen im Randbereich einen größeren Querschnitt aufweisen als zur Mitte hin. Der Querschnitt der Perforationen kann zur Mitte hin z. B. sukzessive abnehmen.

Angegeben ist ein Fahrzeug, eine Fluggastbrücke oder eine Gebäudeverbindung mit zwei relativ zueinander beweglichen Fahrzeugteilen oder Bauteilen. Das Fahrzeug, die Fluggastbrücke oder die Gebäudeverbindung kann jedes hierin offenbarte Übergangselement umfassen.

### KURZE BESCHREIBUNG DER FIGUREN

Nachfolgend wird anhand von Figuren die Offenbarung bzw. weitere Ausführungsformen und Vorteile der Offenbarung näher erläutert, wobei die Figuren lediglich Ausführungsbeispiele der Offenbarung beschreiben. Gleiche Bestandteile in den Figuren werden mit gleichen Bezugszeichen versehen.
- Fig. 1: zeigt ein Flächengebilde 100 in einer Draufsicht mit angedeutetem Schnitt A-A;
- Fig. 2: zeigt das Flächengebilde 100 in der in Fig. 1 angedeuteten Schnittansicht A-A;
- Fig. 3a: zeigt schematisch eine Anordnung von Materialschwächungen 111 in einem Flächengebilde 100;
- Fig. 3b: zeigt schematisch eine Anordnung von Materialschwächungen 111 in einem Flächengebilde 100;
- Fig. 4a: zeigt schematisch eine Ausführung von Materialschwächungen 111 in einem Flächengebilde 100;
- Fig. 4b: zeigt schematisch eine Ausführung von Materialschwächungen 111 in einem Flächengebilde 100;
- Fig. 4c: zeigt schematisch eine Ausführung von Materialschwächungen 111 in einem Flächengebilde 100;
- Fig. 5: zeigt schematisch eine Schnittansicht eines mehrschichtigen Flächengebildes 500;
- Fig. 6a: zeigt einen Schritt bei einer Herstellung eines Flächengebildes 100;
- Fig. 6b: zeigt einen weiteren Schritt bei einer Herstellung eines Flächengebildes 100;
- Fig. 6c: zeigt einen weiteren Schritt bei einer Herstellung eines Flächengebildes 100;
- Fig. 6d: zeigt einen weiteren Schritt bei einer Herstellung eines Flächengebildes 100;
- Fig. 7: zeigt ein Übergangselement 1000;
- Fig. 8: zeigt ein Fahrzeug 2000;
- Fig. 9a: zeigt schematisch ein Flächengebilde 100 für eine Ecke;
- Fig. 9b: zeigt das Flächengebilde 100 gemäß Fig. 9a zu der Ecke geformt; und
- Fig. 10: zeigt schematisch mehrere Ausführungen von Materialschwächungen 111 in einem Flächengebilde 100.

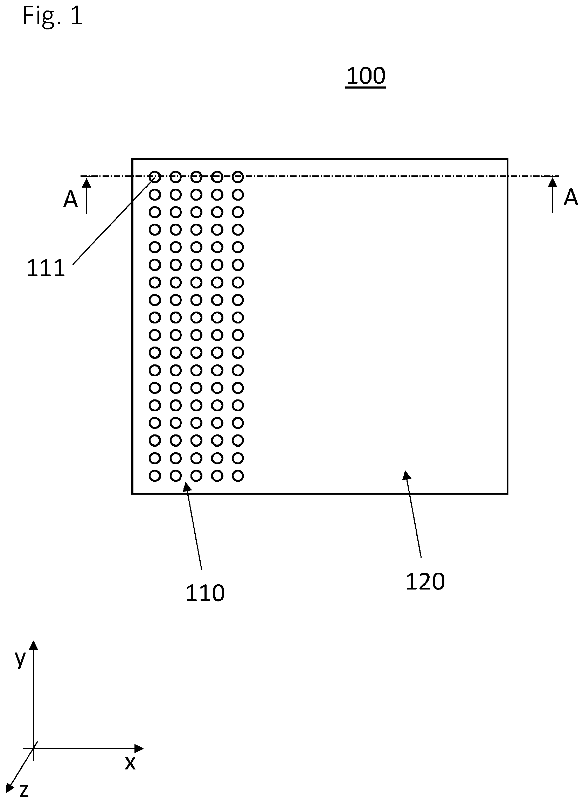

Fig. 1 zeigt schematisch ein Flächengebilde 100 in einer Draufsicht. Das Flächengebilde 100 kann eine x-y-Ebene definieren. Die Ebene kann durch die flächige Erstreckung des Flächengebildes 100 definiert werden. Senkrecht zu der x-y-Ebene kann eine z-Richtung orientiert sein. In z-Richtung kann die Dicke des Flächengebildes 100 vorliegen.

Das Flächengebilde 100 kann eine um ein Vielfaches größere Breite (z.B. in x-Richtung) und/oder Länge (z.B. in y-Richtung) als Dicke (z.B. in z-Richtung) aufweisen. Das Vielfache kann zumindest fünf, bevorzugt zumindest zehn, bevorzugter zumindest zwanzig sein.

Das Flächengebilde 100 kann eine im Wesentlichen (±10 % oder ±5 %) konstante Dicke aufweisen, insbesondere über die gesamte Erstreckung des Flächengebildes 100.

Das Flächengebilde 100 weist einen ersten Abschnitt 110 und einen zweiten Abschnitt 120 auf. Das Flächengebilde 100 kann mehrere erste Abschnitte 110 aufweisen, insbesondere zumindest zwei, zumindest drei oder zumindest vier erste Abschnitte 110. Besonders bevorzugt weist das Flächengebilde 100 genau vier erste Abschnitte 110 auf. Jeder der ersten Abschnitte 110 kann jeder hierin offenbarte erste Abschnitt 110 sein.

Alternativ oder zusätzlich kann das Flächengebilde 100 mehrere zweite Abschnitte 120 aufweisen, beispielsweise zumindest zwei, zumindest drei oder zumindest vier zweite Abschnitte 120. Bevorzugt weist das Flächengebilde genau vier zweite Abschnitte 120 auf. Jeder der zweiten Abschnitte 120 kann jeder hierin offenbarte zweite Abschnitt 120 sein.

Erste Abschnitte 110 und zweite Abschnitte 120 können alternierend in dem Flächengebilde 100 vorgesehen sein. Ein zweiter Abschnitt 120 kann auf einen ersten Abschnitt 110 folgen, auf den zweiten Abschnitt 120 kann ein weiterer erster Abschnitt 110 folgen. Die alternierenden Anordnungen von ersten und zweiten Abschnitten 110, 120 kann in einer Richtung der x-y-Ebene betrachtet werden, beispielsweise in x-Richtung und/oder in y-Richtung.

Ein Abstand zwischen einem ersten Abschnitt 110 und einem zweiten Abschnitt 120 kann zumindest 0,5 m, bevorzugt zumindest 1,0 m, bevorzugter zumindest 1,5 m, bevorzugter zumindest 2,0 m, betragen.

Der erste Abschnitt 110 weist zumindest eine Materialschwächung 111 auf. Bevorzugt weist der erste Abschnitt 110 eine Vielzahl, insbesondere zumindest 10, zumindest 50 oder zumindest 100 Materialschwächungen, auf. Jeder der Materialschwächungen 111 kann jede hierin offenbarte Materialschwächung 111 sein. Die Materialschwächungen 111 von verschiedenen ersten Abschnitten 110 eines Flächengebildes 100 können sich in der Art und Anordnung unterscheiden oder gleich sein.

Der zweite Abschnitt 120 weist bevorzugt keine Materialschwächung 111 auf. Ein zweiter Abschnitt 120 kann ein Abschnitt des Flächengebildes 100 mit einer Fläche von zumindest 10 cm², zumindest 50 cm², zumindest 100 cm² oder zumindest 200 cm², sein, der keine Materialschwächung 111 aufweist.

In dem ersten Abschnitt 110 kann ein Abstand zwischen benachbarten Materialschwächungen 111 zumindest 1 mm, bevorzugt zumindest 3 mm, bevorzugter zumindest 10 mm, sein. Der Abstand kann in der x-y-Ebene vorliegen.

Der erste Abschnitt 110 und der zweite Abschnitt 120 unterscheiden sich in zumindest einer mechanischen Eigenschaft. Bevorzugt unterscheiden sich der erste Abschnitt 110 und der zweite Abschnitt 120 in zumindest zwei, bevorzugt zumindest drei, mechanischen Eigenschaften. Die Biegesteifigkeit, die Elastizität, der Elastizitätsmodul, die Höchstzugkraft, die Höchstzugkraft-Dehnung, die Zugkraft und die Dehnung, wie hierin beschrieben, können jeweils eine mechanische Eigenschaft sein. Allgemein kann sich bei einem Unterschied in einer mechanischen Eigenschaft ein Wert der mechanischen Eigenschaft unterscheiden. Beispielsweise kann der Wert einer mechanischen Eigenschaft in dem ersten Abschnitt 110 größer oder geringer sein als der Wert der (gleichen) mechanischen Eigenschaft in dem zweiten Abschnitt 120.

Die mechanische Eigenschaft des zweiten Abschnitts 120 kann gleich sein zu der mechanischen Eigenschaft des Flächengebildes 100 ohne Materialschwächung 111, insbesondere für einen gleichen Probekörper. Durch die Materialschwächung 111 kann die mechanische Eigenschaft verändert werden, sodass die mechanische Eigenschaft in dem ersten Abschnitt 110, der zumindest eine Materialschwächung 111 umfasst, verändert wird oder ist.

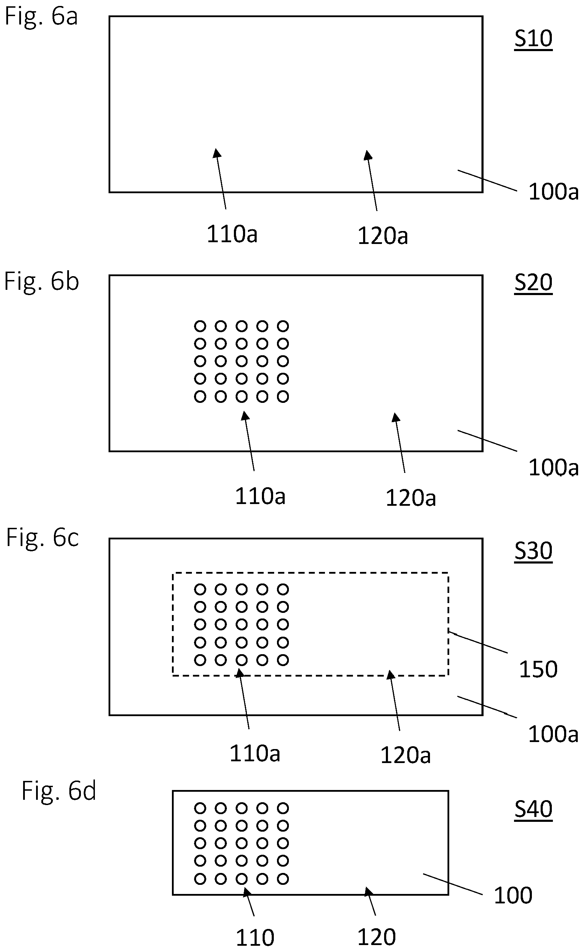

Allgemein kann die Materialschwächung 111 eine strukturelle oder physische Veränderung in dem Flächengebilde 100 sein. Die Materialschwächung 111 kann nachträglich in ein Flächenelement (z.B. ein Flächengebilde-Vorläufer) eingebracht werden oder sein. Mit anderen Worten, ein Flächenelement oder ein Flächengebilde-Vorläufer kann durch ein Einbringen oder Aufbringen einer Materialschwächung 111 bearbeitet werden, sodass sich eine mechanische Eigenschaft verändert. Dies wird unten mit Blick auf die Fig. 6a bis 6d detaillierter beschrieben.

Die Materialschwächung 111 kann eine Ausnehmung, eine Perforierung, eine Einkerbung, eine Einschnürung und/oder eine Dickenreduktion sein. Besonders bevorzugt ist die Materialschwächung 111 eine Perforierung, insbesondere eine Laserperforierung.

Das Flächengebilde 100 kann flexibel oder nicht-starr sein.

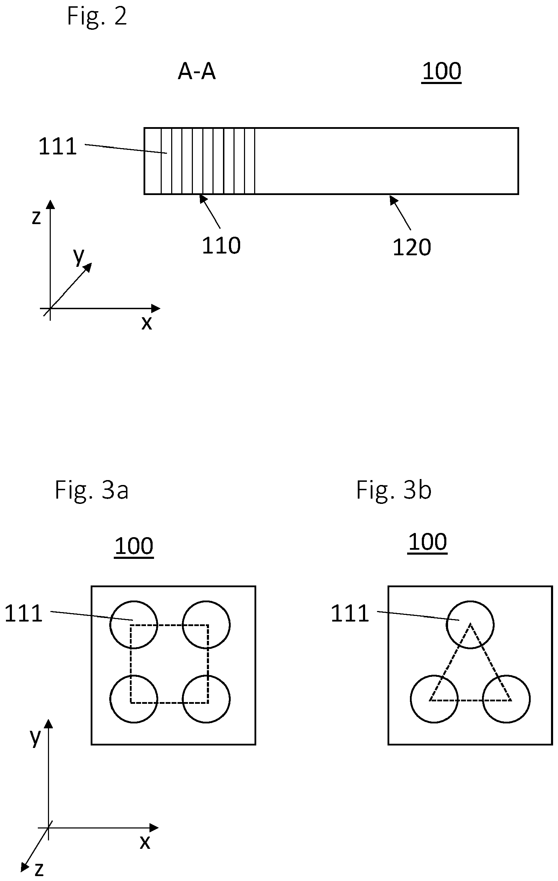

Der in Fig. 1 angedeutete Schnitt A-A ist schematisch in Fig. 2 dargestellt. In dem ersten Abschnitt 110 sind mehrere Materialschwächungen 111 gezeigt.

In dem Beispiel der Fig. 2 erstreckt sich die Materialschwächung 111 bzw. jede der Materialschwächungen 111 vollständig durch das Flächengebilde 100. Die Materialschwächung 111 kann sich von einer ersten Seite des Flächengebildes 100 zu einer zweiten Seite des Flächengebildes 100 erstrecken. Die zweite Seite des Flächengebildes 100 kann der zweiten Seite des Flächengebildes 100 gegenüberliegen. Eine solche Materialschwächung 111 kann durch ein Stanzen oder Laserperforieren hergestellt werden.

Ebenso kann sich die Materialschwächung 111 nicht vollständig durch das Flächengebilde 100 erstrecken. Die Materialschwächung 111 kann sich höchstens teilweise durch das Flächengebilde 100 erstrecken. Beispielsweise kann die Dicke des Flächengebildes 100 reduziert werden, um eine Materialschwächung 111 herzustellen. Dies kann durch ein Abtragen von Material des Flächengebildes 100 durchgeführt werden. Ebenso kann eine Einschnürung oder Quetschung eines Abschnitts des Flächengebildes 100 durchgeführt werden.

Die Materialschwächung 111 kann ohne Dickenreduktion oder ohne ein (mechanisches) Entfernen von Material des Flächengebildes 100 in das Flächengebilde 100 eingebracht werden. Das Flächengebilde 100 kann bei einer Materialschwächung 111 die gleiche Dicke aufweisen wie außerhalb der Materialschwächung 111. Dazu kann das Flächengebilde 100 beispielsweise mit elektromagnetischer Strahlung bestrahlt werden, um die Struktur des Flächengebildes 100 zu verändern. Dabei kann die Dicke des Flächengebildes 100 unverändert bleiben.

Die Materialschwächung 111 kann sich senkrecht zu der x-y-Ebene erstrecken, also beispielsweise in z-Richtung. Die Materialschwächung 111 kann sich abgewinkelt (ungleich 90°) zu der x-y-Ebene erstrecken. Ein Winkel zwischen der Materialschwächung 111 und der x-y-Ebene kann zwischen 10° und 80°, bevorzugt zwischen 30° und 60°, liegen.

Die Fig. 3a und 3b zeigen jeweils schematisch eine Anordnung von Materialschwächungen 111 in einem Flächengebilde 100.

In Fig. 3a sind die Mittelpunkte der Materialschwächungen 111 an Ecken eines gedachten Vierecks angeordnet. Das gedachte Viereck ist durch eine gestrichelte Linie angedeutet. Das gedachte Viereck und die Mittelpunkte der Materialschwächungen 111 können in der x-y-Ebene vorliegen. Das Viereck kann ein Rechteck, ein Quadrat, ein Trapez, ein Rhombus, ein Drachenviereck oder ein konkaves Viereck sein. Die Mittelpunkte von jeweils vier der Materialschwächungen 111, insbesondere jeweils vier aller Materialschwächungen 111 in dem ersten Abschnitt 110, können an Ecken des gedachten Vierecks vorliegen. Das gedachte Viereck kann für alle Materialschwächungen 111 gleich sein. Jeweils ein Mittelpunkt einer Materialschwächung 111 kann an einer Ecke des gedachten Vierecks angeordnet sein.

In Fig. 3b sind die Mittelpunkte der Materialschwächungen 111 an Ecken eines gedachten Dreiecks angeordnet. Das gedachte Dreieck ist durch eine gestrichelte Linie angedeutet. Das gedachte Dreieck und die Mittelpunkte der Materialschwächungen können in der x-y-Ebene vorliegen. Das Dreieck kann ein gleichseitiges Dreieck, ein gleichschenkliges Dreieck, ein rechtwinkliges Dreieck oder ein unregelmäßiges Dreieck sein. Die Mittelpunkte von jeweils drei der Materialschwächungen 111, insbesondere jeweils drei aller Materialschwächungen 111 in dem ersten Abschnitt 110, können an Ecken des gedachten Dreiecks vorliegen. Das gedachte Dreieck kann für alle Materialschwächungen 111 gleich sein. Jeweils ein Mittelpunkt einer Materialschwächung 111 kann an einer Ecke des gedachten Dreiecks angeordnet sein.

Die Materialschwächungen 111 können in dem ersten Abschnitt 110 in einem regelmäßigen Raster vorliegen. Alternativ können die Materialschwächungen in dem ersten Abschnitt 110 in keinem regelmäßigen Raster vorliegen. Die Materialschwächungen 111 können zufallsverteilt in dem ersten Abschnitt 110 vorliegen. Die Materialschwächungen 111 können quasizufällig in dem ersten Abschnitt 110 vorliegen. Eine Zufallsverteilung kann durch einen randomisierten Algorithmus ermittelt werden. Eine quasi-zufällige Verteilung kann durch einen nichtrandomisierten Algorithmus ermittelt werden.

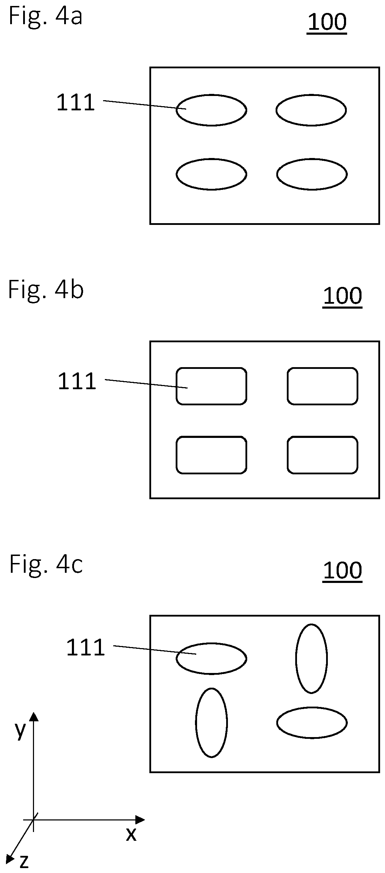

In den Fig. 4a bis 4c sind Materialschwächungen 111 mit unterschiedlichen Formen in einem Flächengebilde 100 gezeigt.

Fig. 4a zeigt Materialschwächungen 111 in dem Flächengebilde 100. Die Materialschwächungen 111 weisen einen unrunden, insbesondere ovalen, Querschnitt auf. Der Querschnitt kann in der x-y-Ebene vorliegen. Durch einen unrunden Querschnitt kann die mechanische Eigenschaft anisotrop, also richtungsabhängig, sein. In einer ersten Richtung (z.B. in x-Richtung) kann die mechanische Eigenschaft unterschiedlich zu der mechanischen Eigenschaft in einer zweiten Richtung (z.B. in y-Richtung) sein. Die erste Richtung ist bevorzugt nicht-parallel zu der zweiten Richtung, besonders bevorzugt ist die erste Richtung senkrecht zu der zweiten Richtung. Die erste und zweite Richtung können in der x-y-Ebene orientiert sein.

Fig. 4b zeigt Materialschwächungen 111 in dem Flächengebilde 100, wobei die Materialschwächungen 111 eine andere Form aufweisen als die Materialschwächungen 111 von Fig. 4a. Die Materialschwächungen 111 weisen einen im Wesentlichen viereckigen Querschnitt auf, beispielsweise einen rechteckigen oder quadratischen Querschnitt. Bei einem quadratischen Querschnitt kann die mechanische Eigenschaft isotrop sein. Bei einem rechteckigen (nichtquadratischen) Querschnitt kann die mechanische Eigenschaft anisotrop sein. Dies wie mit Blick auf Fig. 4a beschrieben.

Fig. 4c zeigt Materialschwächungen 111 in dem Flächengebilde 100. Die Materialschwächungen 111 sind in diesem Beispiel unterschiedlich orientiert. Die Materialschwächungen 111 können die gleiche Form aufweisen und relativ zueinander rotiert oder verdreht in dem Flächengebilde 100 angeordnet sein.

Allgemein kann ein erster Abschnitt 110 Materialschwächungen 111 aufweisen, die in zumindest einer Eigenschaft gleich sind. Die Eigenschaft kann eine Form, eine Größe, eine Erstreckung in das Flächengebilde und/oder eine Dichte von Materialschwächungen 111 sein. Die Dichte von Materialschwächungen 111 kann als eine Anzahl von Materialschwächungen 111 pro Fläche, beispielsweise als Materialschwächungen 111 pro cm², angegeben werden. Zumindest 50 % der Materialschwächungen 111 des ersten Abschnitts 110 können zumindest eine gleiche Eigenschaft aufweisen. Ebenso können Materialschwächungen 111 in dem ersten Abschnitt 110 keine gleiche Eigenschaft, insbesondere keine gleiche der aufgeführten Eigenschaften, aufweisen.

Allgemein kann die mechanische Eigenschaft isotrop oder anisotrop sein. Die mechanische Eigenschaft kann in einer ersten Richtung (z.B. in x-Richtung) gleich zu der mechanischen Eigenschaft in einer zweiten Richtung (z.B. in y-Richtung) sein. Alternativ kann die mechanische Eigenschaft in einer ersten Richtung (z.B. in x-Richtung) unterschiedlich zu der mechanischen Eigenschaft in einer zweiten Richtung (z.B. in y-Richtung) sein. Die erste Richtung ist bevorzugt nicht-parallel zu der zweiten Richtung, besonders bevorzugt ist die erste Richtung senkrecht zu der zweiten Richtung. Die erste und zweite Richtung können in der x-y-Ebene orientiert sein.

Unterschiedliche erste Abschnitte 110 des Flächengebildes 100 können unterschiedliche Materialschwächungen 111 aufweisen. Beispielsweise können in einem ersten Abschnitt 110 Materialschwächungen 111 mit zumindest einer gleichen Eigenschaft angeordnet sein und in einem weiteren ersten Abschnitt 110 können Materialschwächungen 111 mit zumindest einer gleichen Eigenschaft angeordnet sein. Die zumindest eine Eigenschaft der Materialschwächungen 111 in dem ersten Abschnitt 110 kann unterschiedlich zu der (gleichen) zumindest einen Eigenschaft der Materialschwächungen 111 in dem weiteren ersten Abschnitt 110 sein. Beispielsweise kann die Dichte von Materialschwächungen 111 in einem ersten Abschnitt 110 größer sein als in einem weiteren ersten Abschnitt 110 des Flächengebildes 100.

Abstände zwischen Materialschwächungen 111 in dem ersten Abschnitt 110 können gleich sein, insbesondere zwischen allen Materialschwächungen 111 des ersten Abschnitts 110. Alternativ können Abstände zwischen Materialschwächungen 111 in dem ersten Abschnitt 110 unterschiedlich sein, bevorzugt zwischen zumindest 50 % der Materialschwächungen 111, bevorzugter zwischen allen der Materialschwächungen 111. Der Abstand kann in der x-y-Ebene vorliegen. Der Abstand kann in x-Richtung und/oder in y-Richtung vorliegen.

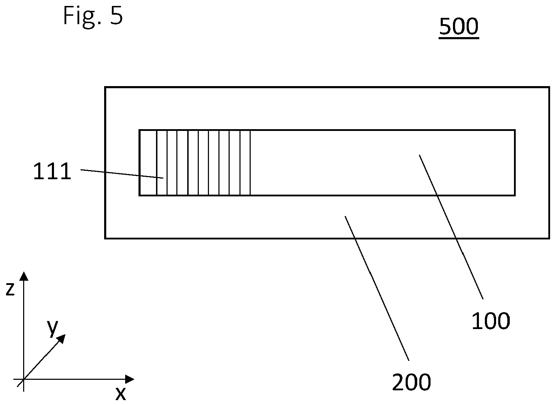

Fig. 5 zeigt ein mehrschichtiges Flächengebilde 500. Das mehrschichtige Flächengebilde 500 kann jedes hierin offenbarte Flächengebilde 100 umfassen.

Zusätzlich zu dem Flächengebilde 100 kann das mehrschichtige Flächengebilde 500 eine Beschichtung 200 umfassen. Zumindest eine Seite des Flächengebildes 100 kann mit der Beschichtung 200 beschichtet sein. Bevorzugt sind alle Seiten des Flächengebildes 100 von der Beschichtung 200 umschlossen oder umgeben.

Auf zumindest einer Seite des Flächengebildes 100 kann die Beschichtung 200 eine größere oder geringere Dicke aufweisen als das Flächengebilde 100.

Wenn es sich bei der Materialschwächung 111 z. B. um eine Ausnehmung oder Perforierung handelt, kann die Beschichtung 200 auch in die Materialschwächung 111 hineinragen oder diese auch vollständig durchdringen.

Die Fig. 6a bis 6d zeigen Schritte eines Herstellverfahrens eines Flächengebildes 100. In dem Verfahren kann jedes hierin offenbarte Flächengebilde 100 hergestellt werden.

In Schritt S10 (Fig. 6a) kann ein Flächenelement 100a (auch als Formgebilde-Vorläufer bezeichnet) bereitgestellt werden. Das Flächenelement 100a weist einen ersten Abschnitt 110a und einen zweiten Abschnitt 120a auf. Das Flächenelement 100a weist zumindest eine mechanische Eigenschaft auf. Der erste Abschnitt 110a und der zweite Abschnitt 120a können in diesem Schritt die gleiche mechanische Eigenschaft aufweisen, insbesondere die gleiche mechanische Eigenschaft wie das Flächenelement 100a.

Das Flächenelement 100a ist bevorzugt einstückig. Das Flächenelement 100a kann aus einem (gleichen) Material bestehen.

In Schritt S20 (Fig. 6b) kann eine oder mehrere Materialschwächungen 111 in den ersten Abschnitt 110a des Flächenelements 100a eingebracht oder aufgebracht werden. Die Materialschwächung 111 oder die Materialschwächungen 111 können jede hierin offenbarte Materialschwächung(en) 111 sein. Bevorzugt wird keine Materialschwächung 111 in den zweiten Abschnitt 120a des Flächenelements 100a eingebracht oder aufgebracht. Insbesondere wird die mechanische Eigenschaft des zweiten Abschnitts 120a des Flächenelements 100a nicht verändert.

Die eine oder mehrere Materialschwächungen 111 können durch Stanzen, Perforieren oder Quetschen in den ersten Abschnitt 110a eingebracht oder aufgebracht werden, insbesondere durch Laserperforieren. Jede andere hierin offenbarte Methode zum Einbringen oder Aufbringen der einen oder mehreren Materialschwächungen 111 ist möglich.

In Schritt S30 (Fig. 6c) kann ein Formabschnitt 150 des Flächenelements 100a abgetrennt werden. Die Form des Formabschnitts 150 kann der Form des späteren Flächengebildes 100 entsprechen. Der Formabschnitt 150 kann jede Form aufweisen. Insbesondere kann der Formabschnitt 150 rechteckig sein. Der Formabschnitt 150 kann so gewählt werden, dass der erste Abschnitt 110a und der zweite Abschnitt 120a des Flächenelements 100a in dem Formabschnitt 150 liegt.

In Schritt S40 (Fig. 6d) ist ein Flächengebilde 100 gezeigt. Das Flächengebilde 100 kann die Form des Formabschnitts 150 aufweisen. Das Flächengebilde 100 kann einen ersten Abschnitt 110 aufweisen. Der erste Abschnitt 110 des Flächengebildes 100 kann gleich sein zu dem ersten Abschnitt 110a des Flächenelements 100a. Das Flächengebilde 100 kann einen zweiten Abschnitt 120 aufweisen. Der zweite Abschnitt 120 des Flächengebildes 100 kann gleich sein zu dem zweiten Abschnitt 120a des Flächenelements 100a.

Jeder der Schritte S10 bis S40 kann ein optionaler Schritt sein.

Das Flächengebilde 100 kann mit einer Beschichtung 200 versehen werden. Dadurch kann jedes hierin offenbarte mehrschichtige Flächengebilde 500 hergestellt werden.

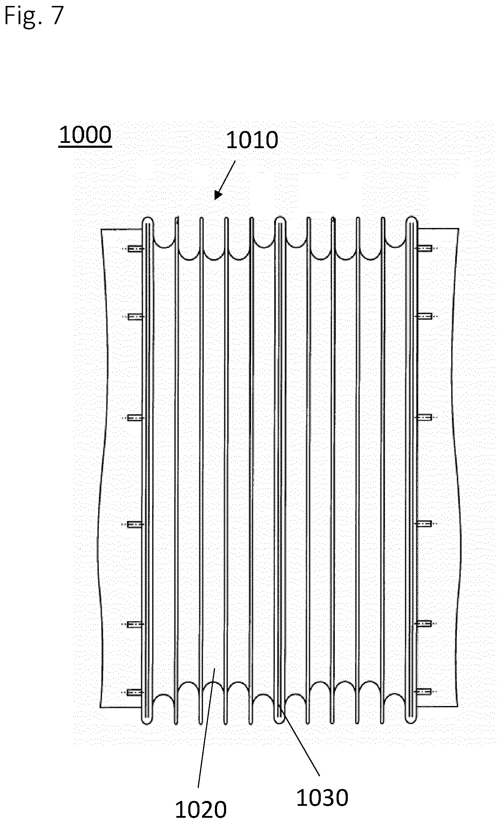

Fig. 7 zeigt ein Übergangselement 1000 in einer Seitenansicht. Das Übergangselement 1000 kann ein Balg sein, insbesondere ein Wellen- oder Faltenbalg. Das Übergangselement 100 kann ein Flächengebilde 100, insbesondere ein mehrschichtiges Flächengebilde 500, umfassen.

Das Übergangselement 1000 kann eine Übergangselementwand 1010 umfassen. Die Übergangselementwand 1010 kann das Flächengebilde 100 oder das mehrschichtige Flächengebilde 500 umfassen oder daraus bestehen. Für eine Übergangselementwand 1010 kann das Flächengebilde 100 oder das mehrschichtige Flächengebilde 500 so geformt werden, dass diese einen tunnelartigen oder kanalartigen Raum umgibt.

Die Übergangselementwand 1010 kann im Querschnitt rechteckig oder kastenförmig sein. Die Übergangselementwand 1010 kann mehrere Ecken, z.B. vier Ecken, aufweisen. Zwischen den Ecken können Seitenbereiche, ein Dachbereich und ein Bodenbereich gebildet sein. Das Flächengebilde 100 kann so in dem Übergangselement 1000 angeordnet sein, dass zumindest ein erster Abschnitt 110 in einer Ecke der Übergangselementwand 1010 angeordnet ist. Insbesondere ist das Flächengebilde 100 so in dem Übergangselement 1000 angeordnet, dass jeweils ein erster Abschnitt 110 in jeweils einer Ecke der Übergangselementwand 1010 angeordnet ist.

Das Flächengebilde 100 kann so in dem Übergangselement 1000 angeordnet sein, dass zumindest ein zweiter Abschnitt 120 in einem Seiten-, Boden- oder Dachbereich der Übergangselementwand 1010 angeordnet ist. Insbesondere ist das Flächengebilde 100 so in dem Übergangselement 1000 angeordnet, dass jeweils ein zweiter Abschnitt 120 in jeweils einem Seiten-, Boden- und/oder Dachbereich der Übergangselementwand 1010 angeordnet ist.

Durch die Anordnung von einem ersten Abschnitt 110 mit zumindest einer Materialschwächung 111 in einer Ecke der Übergangselementwand 1010 lässt sich das Flächengebilde dort gut drapieren. In Seiten-, Boden- und Dachbereichen der Übergangselementwand 1010 kann der zweite Abschnitt 120 größere Kräfte aufnehmen.

Das Übergangselement 1000 kann mehrere beabstandete Rahmen 1030, z.B. Balgspannrahmen, umfassen. Die Rahmen 1030 können das Übergangselement 1000 vollständig umlaufen. Zwischen den Rahmen 1030 können Übergangselementwände 1010 eingespannt sein.

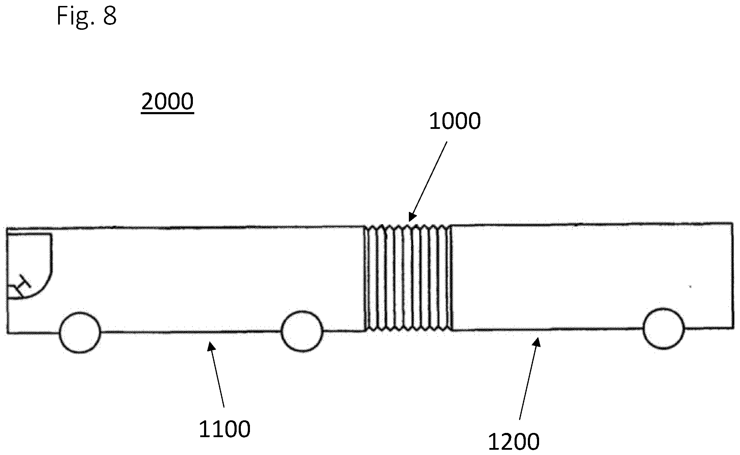

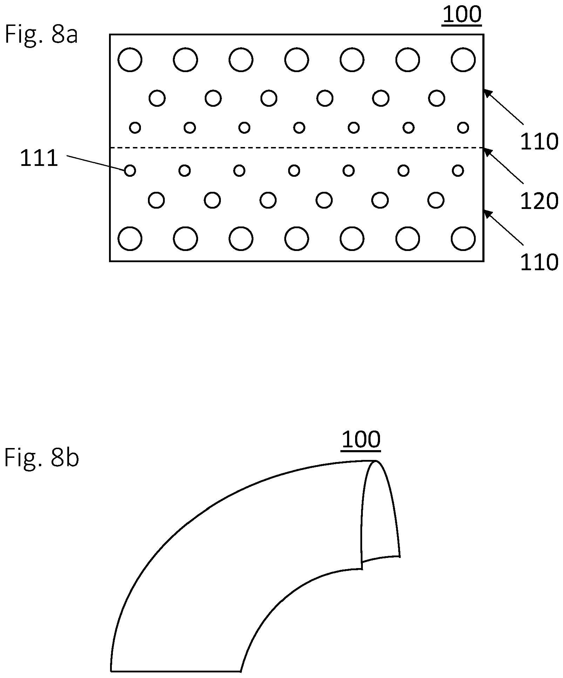

Fig.8 zeigt ein Fahrzeug 2000. Das Fahrzeug 2000 kann ein erstes Fahrzeugteil 1100 und ein zweites Fahrzeugteil 1200 umfassen. Das Übergangselement 1000 kann zwischen dem ersten und zweiten Fahrzeugteil 1100, 1200 angeordnet sein. Das Übergangselement 1000 kann einen Übergang der zwei relativ zueinander beweglich miteinander verbunden Fahrzeugteilen 1100, 1200 schützen. Das Fahrzeug kann ein Schienenfahrzeug oder ein Bus, insbesondere ein Gelenkbus, sein.

Das erste und zweite Fahrzeugteil 1100, 1200 können um eine vertikale Drehachse relativ zueinander verdrehbar und/oder in Fahrtrichtung relativ zueinander verschiebbar und/oder quer zur Fahrtrichtung verschiebbar und/oder um eine Längsachse des Fahrzeugs drehbar miteinander verbunden sein.

Das Übergangselement 1000 kann zum Schutz eines Übergangs eines Fluggastbrücke oder Fluggasttreppe eingesetzt werden. Ebenso kann das Übergangselement 1000 zum Schutz eines Übergangs von zwei Gebäudeteilen, beispielsweise zwischen einer Brücke und einem Gebäudeabschnitt, eingesetzt werden.

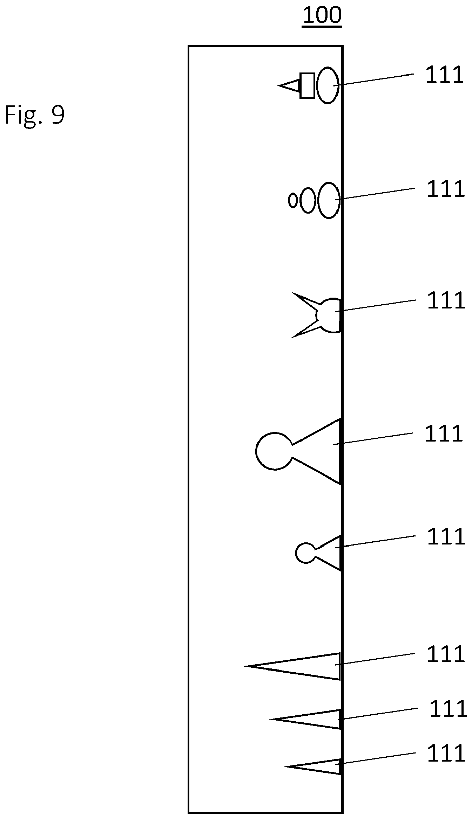

Fig. 9a zeigt ein konkretes Beispiel, wie ein Flächengebilde 100 für eine Ecke eines Übergangselements 1000 in Form eines Wellenbalgs aussehen kann. Es handelt sich um ein streifenförmiges Flächengebilde 100 mit zwei Randbereichen und einem durch eine gestrichelte Linie angedeuteten Mittenbereich. In dem Flächengebilde 100 sind mehrere erste Abschnitte mit Materialschwächungen 111 vorgesehen. Der Mittenbereich ist bei dem dargestellten Beispiel ohne Materialschwächungen 111 ausgebildet, d. h. es handelt sich um den zweiten Abschnitt 120. Die ersten Abschnitte 110 unterscheiden sich insbesondere in der Größe der Materialschwächungen 111. Die Größe der Materialschwächungen nimmt dabei in Richtung der Randbereiche des Flächengebildes 100 zu.

Fig. 9b zeigt schematisch das Flächengebilde 100 gemäß Fig. 9a nach Beschichtungsschritt, in dem das Flächengebilde 100 beidseitig mit einer Beschichtung 200 beschichtet wird, und einem Formungsschritt, in dem das Flächengebilde 100 zu der gewünschten Ecke für das Übergangselement 1000 umgeformt wird. Durch die größeren Materialschwächungen 111 in den Randbereichen lässt sich das Flächengebilde 100 in den Randbereichen stärker umformen als z. B. im Mittenbereich, ohne dass sich Falten bilden oder allenfalls in unwesentlichem Umfang.

Fig. 10 zeigt ein Flächengebilde 100 mit weiteren Beispielen für die Gestaltung der Materialschwächungen 111. Konkret können die Materialschwächungen 111 Hinterschneidungen, verschiedene miteinander kombinierte Geometrien, verschiedene miteinander kombinierte Größen usw. aufweisen. Die dargestellten Geometrien, Größen und Kombinationen von Geometrien und Größen für die Materialschwächungen 111 sind lediglich exemplarisch.

### BEZUGSZEICHENLISTE

- 100: Flächengebilde
- 100a: Flächenelement
- 110: Abschnitt
- 110a: Abschnitt
- 111: Materialschwächung
- 120: Abschnitt
- 120a: Abschnitt
- 150: Formabschnitt
- 200: Beschichtung
- 500: Mehrschichtiges Flächengebilde
- 1000: Übergangselement
- 1010: Übergangselementwand
- 1020: Übergangselementwandabschnitt
- 1030: Rahmen
- 1100: Fahrzeugteil
- 1200: Fahrzeugteil
- 2000: Fahrzeug

## Patentansprüche

1. Flächengebilde (100), insbesondere textiles Flächengebilde (100), für ein Übergangselement (1000) zum Schutz eines Übergangs von zwei relativ zueinander beweglich miteinander verbundenen Fahrzeugteilen oder Bauteilen, wobei:
- das Flächengebilde (100) zumindest einen ersten Abschnitt (110) und zumindest einen zweiten Abschnitt (120) aufweist;
- sich der erste Abschnitt (110) und der zweite Abschnitt (120) in zumindest einer mechanischen Eigenschaft unterscheiden; und
- der erste Abschnitt (110) zumindest eine Materialschwächung (111) zur Veränderung der zumindest einen mechanischen Eigenschaft in dem ersten Abschnitt (110) aufweist.

2. Flächengebilde (100) nach Anspruch 1, wobei die zumindest eine mechanische Eigenschaft eine Biegesteifigkeit, insbesondere bestimmt nach VDA 230-209 Teil C, und/oder eine Elastizität, insbesondere bestimmt nach DIN EN ISO 20932-1:2020-05, und/oder einen Elastizitätsmodul, und/oder eine Höchstzugkraft, und/oder eine Höchstzugkraft-Dehnung, und/oder eine Zugkraft, und/oder eine Dehnung, insbesondere bestimmt nach DIN EN ISO 13934-1:2013-08, umfasst.

3. Flächengebilde (100) nach Anspruch 2, wobei die Biegesteifigkeit in dem ersten Abschnitt (110) geringer ist als in dem zweiten Abschnitt (120), und/oder wobei die Elastizität in dem ersten Abschnitt (110) größer ist als in dem zweiten Abschnitt (120), und/oder wobei der Elastizitätsmodul in dem ersten Abschnitt (110) geringer ist als in dem zweiten Abschnitt (120), und/oder wobei die Höchstzugkraft in dem ersten Abschnitt (110) geringer ist als in dem zweiten Abschnitt (120), und/oder wobei die Höchstzugkraft-Dehnung in dem ersten Abschnitt (110) größer ist als in dem zweiten Abschnitt (120), und/oder wobei die Zugkraft in dem ersten Abschnitt (110) geringer ist als in dem zweiten Abschnitt (120), und/oder wobei die Dehnung in dem ersten Abschnitt (110) größer ist als in dem zweiten Abschnitt (120).

4. Flächengebilde (100) nach einem der vorhergehenden Ansprüche, wobei die Materialschwächung (111) eine Ausnehmung, Perforierung, Einkerbung, Einschnürung und/oder eine Dickenreduktion ist, bevorzugt wobei die Materialschwächung (111) eine Perforierung, insbesondere eine Laserperforierung, ist.

5. Flächengebilde (100) nach einem der vorhergehenden Ansprüche, wobei die Materialschwächung (111) einen kreisrunden, ovalen, dreieckigen, viereckigen, insbesondere rechteckigen oder quadratischen, oder n-eckigen Querschnitt aufweist; und/oder wobei die Materialschwächung (111) eine Querschnittsfläche von zumindest 0,5 mm², bevorzugt zumindest 1 mm², bevorzugter zumindest 3 mm², bevorzugter zumindest 6 mm², aufweist.

6. Flächengebilde (100) nach einem der vorhergehenden Ansprüche, wobei der erste Abschnitt (110) eine Vielzahl von Materialschwächungen (111) aufweist, bevorzugt zumindest 10 Materialschwächungen (111), bevorzugter zumindest 50 Materialschwächungen (111), bevorzugter zumindest 100 Materialschwächungen (111), aufweist, und/oder wobei der erste Abschnitt (110) zwischen 0,01 Materialschwächungen pro cm² und 100 Materialschwächungen pro cm², bevorzugt zwischen 0,05 Materialschwächungen pro cm² und 50 Materialschwächungen pro cm², bevorzugter zwischen 0,1 Materialschwächungen pro cm² und 10 Materialschwächungen pro cm², aufweist.

7. Flächengebilde (100) nach einem der vorhergehenden Ansprüche, wobei die Materialschwächungen (111) in einem regelmäßigen Raster in dem ersten Abschnitt (110) angeordnet sind oder die Materialschwächungen (111) unregelmäßig in dem ersten Abschnitt (110) angeordnet sind.

8. Flächengebilde (100) nach einem der vorhergehenden Ansprüche, wobei eine Fläche des ersten Abschnitts (110) zumindest 5 %, bevorzugt zumindest 10 %, einer Gesamtfläche des Flächengebildes (100) beträgt, und/oder wobei eine Fläche des zweiten Abschnitts (120) zumindest 20 %, bevorzugt zumindest 30 %, einer Gesamtfläche des Flächengebildes (100) beträgt, und/oder wobei eine Fläche des ersten Abschnitts (110) zumindest 10 cm², bevorzugt zumindest 20 cm², bevorzugter zumindest 30 cm², beträgt.

9. Flächengebilde (100) nach einem der vorhergehenden Ansprüche, wobei das Flächengebilde (100) ein Polyester, ein Polyamid, ein Aramid, Polypropylen, Baumwolle, und/oder Viskose umfasst; und/oder wobei das Flächengebilde (100) ein Gewebe, ein Gestricke, ein Gewirke, ein Vlies oder ein Gelege ist.

10. Mehrschichtiges Flächengebilde (500) für ein Übergangselement (1000) zum Schutz eines Übergangs von zwei relativ zueinander beweglich miteinander verbundenen Fahrzeugteilen oder Bauteilen, wobei:
- das mehrschichtige Flächengebilde (500) ein Flächengebilde (100) nach einem der vorhergehenden Ansprüche umfasst; und
- zumindest eine Seite des Flächengebildes (100) mit einer Beschichtung (200) versehen ist.

11. Mehrschichtiges Flächengebilde (500) nach Anspruch 10, wobei alle Seiten des Flächengebildes (100) mit der Beschichtung (200) versehen sind; und/oder wobei die Beschichtung (200) einen Kunststoff umfasst, insbesondere ein Elastomer, ein Silikon, ein chlorsulfoniertes Polyethylen, ein TPU, EPDM und/oder PVC umfasst; und/oder wobei die Beschichtung (200) eine größere Dicke oder eine geringere Dicke aufweist als das Flächengebilde (100).

12. Verfahren zur Herstellung eines Flächengebildes (100) für ein Übergangselement (1000) zum Schutz eines Übergangs von zwei relativ zueinander beweglich miteinander verbundenen Fahrzeugteilen oder Bauteilen, insbesondere zur Herstellung eines Flächengebildes (100) nach einem der Ansprüche 1 bis 9, das Verfahren mit den Schritten:
- Bereitstellen eines Flächenelements (100a) mit zumindest einer mechanischen Eigenschaft und zumindest einem ersten Abschnitt (110a) und zumindest einem zweiten Abschnitt (120a);
- Aufbringen oder Einbringen zumindest einer Materialschwächung (111) auf oder in das Flächenelement (100a) in dem ersten Abschnitt (110a), insbesondere durch Laserperforierung, sodass die zumindest eine mechanische Eigenschaft in dem ersten Abschnitt (110a) verändert wird; und
- Erhalten eines Flächengebildes (100) mit zumindest einem ersten Abschnitt (110) und zumindest einem zweiten Abschnitt (120), wobei sich der erste Abschnitt (110) und der zweite Abschnitt (120) in der zumindest einen mechanischen Eigenschaft unterscheiden.

13. Verfahren nach Anspruch 12, wobei:
- das Verfahren zusätzlich umfasst: Abtrennen eines Formabschnitts (150) des Flächenelements (100a), wobei der Formabschnitt (150) den ersten Abschnitt (110) und den zweiten Abschnitt (120) umfasst, wobei der Formabschnitt (150) eine Form aufweist, und wobei das Flächengebilde die Form des Formabschnitts (150) aufweist; und/oder
- das Verfahren zusätzlich umfasst: Aufbringen einer Beschichtung (200) auf zumindest eine Seite des Flächenelements (100a) oder des Flächengebildes (100), insbesondere wobei die Beschichtung (200) den ersten Abschnitt (110) zumindest teilweise bedeckt; und/oder
- wobei der zweite Abschnitt (120) des Flächengebildes (100) die zumindest eine mechanische Eigenschaft des Flächenelements (100a) aufweist; und/oder
- wobei die zumindest eine mechanische Eigenschaft des Flächenelements (100a) nicht verändert wird.

14. Übergangselement (1000) zum Schutz eines Übergangs von zwei relativ zueinander beweglich miteinander verbundenen Fahrzeugteilen oder Bauteilen (1100, 1200) umfassend das Flächengebilde (100) nach einem der Ansprüche 1 bis 9 oder das mehrschichtige Flächengebilde (500) nach einem der Ansprüche 10 bis 11.

15. Fahrzeug, Fluggastbrücke, Fluggasttreppe oder Gebäudeverbindung mit zwei relativ zueinander beweglich miteinander verbundenen Fahrzeugteilen oder Bauteilen (1100, 1200) und einem Übergangselement (1000) nach Anspruch 14.
